# EUROPEAN PATENT APPLICATION

(11) **EP 4 464 638 A1**
(43) Date of publication of application: **20.11.2024**
(21) Application number: 24173492.0
(22) Date of filing: 30.04.2024
(51) Int. Cl.: B66B 1/28, B66B 11/04

(54) **DUAL MACHINE ARRANGEMENT**

(30) Priority: 03.05.2023 US 202318311866
(71) Applicant: Otis Elevator Company, Farmington, Connecticut 06032 (US)
(72) Inventor: Wei, Wei, Farmington, 06032 (US); Connolly, Kyle, Farmington, 06032 (US)
(74) Representative: Schmitt-Nilson Schraud Waibel Wohlfrom Patentanwälte Partnerschaft mbB

(57) **Abstract**

A dual machine arrangement (201) is provided for a hoist assembly of an elevator system (101). The dual machine arrangement includes dual machines (210), each comprising a motor (2110, 2120) and a sheave (2111, 2121), which is rotatable by the motor, a coupling (220) by which respective ends (2112, 2122) of the sheaves of the dual machines are connected and drive circuitry (230) configured to synchronize reverse operations of the dual machines to raise or lower a load.

## Description

The present disclosure relates to elevator systems and, in particular, to an elevator system with a dual machine arrangement.

Elevator machine material costs tend to increase significantly with increases in machine capacity and decreases in machine volume. This is especially true for high-rise and heavy-duty applications. Typically, costs for electrical machine materials increase by up to 300% or more when a new, large machine is developed with a 200% capacity increase. Large investments are thus required for such development, while the development contends with challenges to maintain small volumes for sourcing and manufacture.

According to an aspect of the disclosure, a dual machine arrangement is provided for a hoist assembly of an elevator system. The dual machine arrangement includes dual machines, each comprising a motor and a sheave, which is rotatable by the motor, a coupling by which respective ends of the sheaves of the dual machines are connected and drive circuitry configured to synchronize reverse operations of the dual machines to raise or lower a load.

Particular embodiments may include at least one, or a plurality of the following optional features, separated from each other or in combination with each other:

In accordance with additional or alternative embodiments, the load is an elevator car.

In accordance with additional or alternative embodiments, each of the motors of the dual machines includes a radial airgap motor.

In accordance with additional or alternative embodiments, the coupling includes a flange that is secured to each of the respective ends of the sheaves of the dual machines.

In accordance with additional or alternative embodiments, the coupling includes a sleeve that is secured to each of the respective ends of the sheaves of the dual machines.

In accordance with additional or alternative embodiments, the coupling is flexible in at least a torsional axis.

In accordance with additional or alternative embodiments, the drive circuitry includes an encoder coupled to one of the dual machines and configured to output a synchronization signal for synchronizing the other of the dual machines with the one of the dual machines and drives respectively disposed to command the reverse operations of the dual machines based in part on the synchronization signal.

In accordance with additional or alternative embodiments, the drives respectively power the reverse operations of the motors of the dual machines.

In accordance with additional or alternative embodiments, the drive circuitry is configured to identify an asynchronous condition of the reverse operations of the dual machines and to correct for the asynchronous condition.

According to an aspect of the disclosure, a dual machine arrangement is provided for a hoist assembly of an elevator system. The dual machine arrangement includes a first machine including a first motor and a first sheave, which is rotatable by the first motor in a first direction, a second machine including a second motor and a second sheave, which is rotatable by the second motor in a second direction, which is a reverse of the first direction, a coupling by which respective ends of the first sheave and the second sheave are connected and drive circuitry configured to synchronize reverse operations of the first motor and the second motor to raise or lower a load.

Particular embodiments may include at least one, or a plurality of the following optional features, separated from each other or in combination with each other:

In accordance with additional or alternative embodiments, the load is an elevator car.

In accordance with additional or alternative embodiments, each of the first and second motors includes a radial airgap motor.

In accordance with additional or alternative embodiments, the coupling includes a flange that is secured to each of the respective ends of the first sheave and the second sheave.

In accordance with additional or alternative embodiments, the coupling includes a sleeve that is secured to each of the respective ends of the first sheave and the second sheave.

In accordance with additional or alternative embodiments, the coupling is flexible in at least a torsional axis.

In accordance with additional or alternative embodiments, the drive circuitry includes an encoder coupled to one of the first and second machines and configured to output a synchronization signal for synchronizing the other of the first and second machines with the one of the first and second machines and first and second drives disposed to command the reverse operations of the first and second motors, respectively, based in part on the synchronization signal.

Particular embodiments may include at least one, or a plurality of the following optional features, separated from each other or in combination with each other:

In accordance with additional or alternative embodiments, the first and second drives power the reverse operations of the first and second motors, respectively.

In accordance with additional or alternative embodiments, the drive circuitry is configured to identify an asynchronous condition of the reverse operations of the first and second motors and to correct for the asynchronous condition.

According to an aspect of the disclosure, a dual machine arrangement is provided for a hoist assembly of an elevator system. The dual machine arrangement includes a first machine including a first motor and a first sheave, which is rotatable by the first motor in a first direction, a second machine including a second motor and a second sheave, which is rotatable by the second motor in a second direction, which is a reverse of the first direction, a flexible coupling by which respective ends of the first sheave and the second sheave are connected and drive circuitry configured to synchronize reverse operations of the first motor and the second motor to raise or lower a load by identifying an asynchronous condition across the flexible coupling of the reverse operations of the first and second motors and correcting for the asynchronous condition.

In accordance with additional or alternative embodiments, the correcting includes one of temporarily speeding up a lagging one of the first motor and the second motor and temporarily slowing down a leading one of the first motor and the second motor.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

For a more complete understanding of this disclosure, reference is now made to the following brief description, taken in connection with the accompanying drawings and detailed description, wherein like reference numerals represent like parts:
FIG. 1 is a perspective view of an elevator system in accordance with embodiments;
FIG. 2 is a side schematic view of a dual machine arrangement that is usable in the elevator system of FIG. 1 in accordance with embodiments;
FIG. 3 is an enlarged side schematic view of a portion of a dual machine arrangement that is usable in the elevator system of FIG. 1 in accordance with embodiments; and
FIG. 4 is a schematic illustration of a flexible coupling of a flange of a dual machine arrangement of an elevator system in accordance with embodiments.

As will be described below, a dual machine arrangement is provided for use with an elevator system. The dual machine arrangement includes two small cantilever machines and effectively functions as a single large machine with double capacity but at a lower cost than a double capacity machine. The two small cantilever machines of the dual machine arrangement will be aligned in reverse directions and the dual machine arrangement further includes a flange or a sleeve at the end of the sheave of each of the two small cantilever machines for mechanical connection with pins and bolts, an encoder that attaches to one of the two small cantilever machines and that provides a synchronized signal to two individual drives power. The flange or the sleeve will ensure a strong and improved structure and synchronization. Each of the two individual drives is provided on a corresponding one of the two small cantilever machines and includes an aligned stator and an aligned rotor. With one of the two small cantilever machines set in the "up" direction the other in the "down" direction both machines will run and export torque in the same direction. In some cases, the flange or the sleeve can be flexible to allow for slight variations in synchronization.

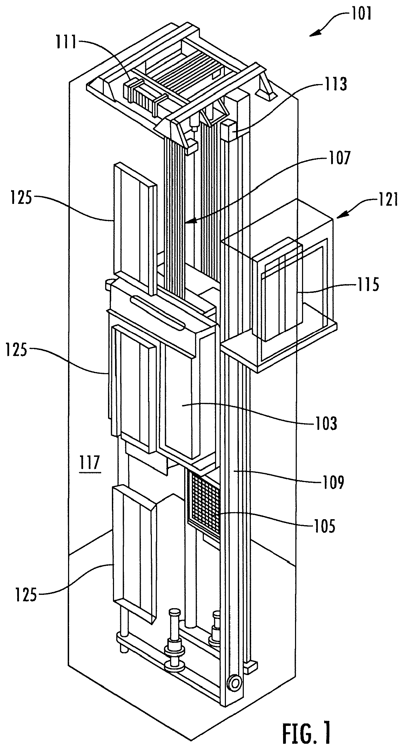

With reference to FIG. 1, which is a perspective view of an elevator system 101, the elevator system 101 includes an elevator car 103, a counterweight 105, a tension member 107, a guide rail 109, a machine 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network, etc.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

The elevator system 101 also includes one or more elevator doors 104. The elevator door 104 may be integrally attached to the elevator car 103 or the elevator door 104 may be located on a landing 125 of the elevator system 101, or both. Embodiments disclosed herein may be applicable to both an elevator door 104 integrally attached to the elevator car 103 or an elevator door 104 located on a landing 125 of the elevator system 101, or both. The elevator door 104 opens to allow passengers to enter and exit the elevator car 103.

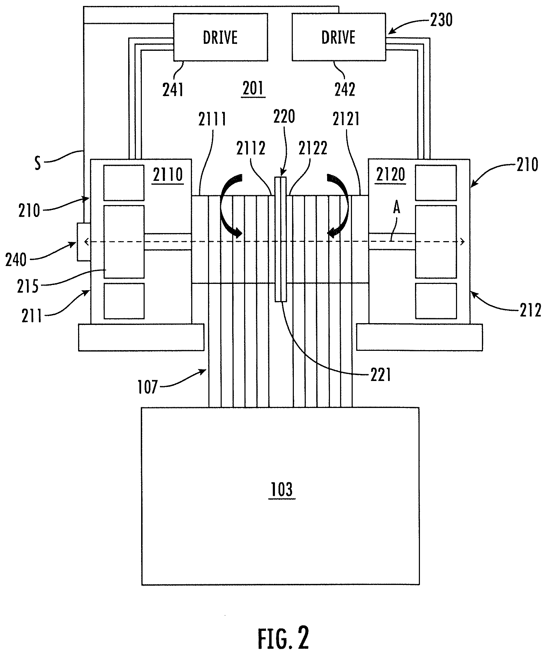

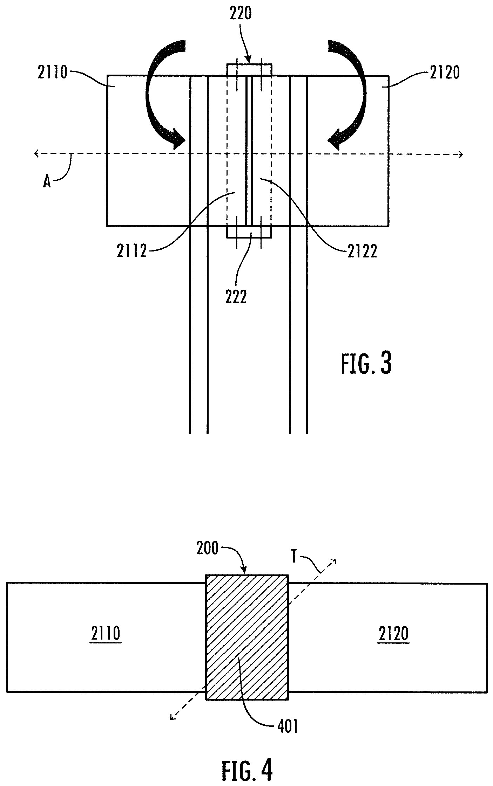

With reference to FIGS. 2 and 3, the machine 111 of FIG. 1 can be provided as a dual machine arrangement 201. The dual machine arrangement 201 includes dual machines 210 or, in greater detail, a first machine 211 and a second machine 212. The first machine 211 includes a first motor 2110 and a first sheave 2111, which is rotatable by the first motor 2110 in a first direction, and the second machine 212 includes a second motor 2120 and a second sheave 2121, which is rotatable by the second motor 2120 in a second direction, which is a reverse of the first direction. Each of the first motor 2110 and the second motor 2120 can include or be provided as a radial airgap motor 215. The dual machine arrangement 201 further includes a coupling 220 and drive circuitry 230. The coupling 220 is provided to connect a distal end 2112 of the first sheave 2111 and a distal end 2122 of the second sheave 2121 to one another. The drive circuitry 230 is configured to synchronize reverse operations of the first motor 2110 and the second motor 2120 so that the first and second sheaves 2111 and 2121 rotate synchronously in opposite directions to raise or lower a load (i.e., the elevator car 103 of FIG. 1).

The first motor 2110, the first sheave 2111, the second motor 2120 and the second sheave 2121 are aligned along a common rotational axis A. In greater detail, the stator and the rotor of the first motor 2110, the first sheave 2111, the stator and the rotor of the second motor 2120 and the second sheave 2121 are aligned along the common rotational axis A.

As shown in FIGS. 2 and 3, the coupling 220 can include one of a flange 221 (see FIG. 2) and a sleeve 222 (see FIG. 3). The flange 221 is secured by mechanical connections, such as pins, screws, etc., to each of the respective distal ends 2112 and 2122 of the first sheave 2110 and the second sheave 2121. The sleeve 222 is secured by mechanical connections, such as pins, screws, etc., to each of the respective distal ends 2112 and 2122 of the first sheave 2110 and the second sheave 2121. In each case, the coupling 220 is provided strength and rigidity along the common rotational axis A such that the first sheave 2110 and the second sheave 2121, which are synchronous, effectively operate as a single non-cantilevered machine. This single, non-cantilevered machine has double the capacity of the first machine 211 and the second machine 212 but does not require costly investments into new machine designs.

With reference to FIG. 4, although the first machine 211 and the second machine 212 are synchronous, it is possible that one can lag or lead the other. Thus, in accordance with further embodiments, the coupling 220 can be provided as a flexible coupling 401. This flexible coupling 401 can be flexible in at least a torsional axis T to account for or accommodate lead/lag of one of the first machine 211 and the second machine 212. In these or other cases, the strength and rigidity of the coupling 220 along the common rotational axis A is maintained.

With reference back to FIG. 2, the drive circuitry 230 can be provided as the controller 115 of FIG. 1, and includes an encoder 240 and first and second drives 241 and 242. The encoder 241 is coupled to one of the first and second machines 211 and 212 and is configured to output a synchronization signal S for synchronizing the other of the first and second machines 211 and 212 with the one of the first and second machines 211 and 212. The first and second drives 241 and 242 are disposed and configured to power the reverse operations of the first and second motors 211 and 212 and to command the reverse operations of the first and second motors 211 and 212, respectively, based at least in part on the synchronization signal S.

In accordance with embodiments, the drive circuitry 230 can be further configured to identify an asynchronous condition (i.e., a lead/lag of one of the first and second motors 211 and 212) of the reverse operations of the first and second motors 211 and 212 and to correct for the asynchronous condition. The identifying can be enabled by the drive circuitry 230 including a position sensor or some other similar sensing device. The correcting can be executed by one of temporarily speeding up a lagging one of the first motor 211 and the second motor 212 and temporarily slowing down a leading one of the first motor 211 and the second motor 212.

Technical effects and benefits of the present disclosure are the provision of a dual machine arrangement for use with an elevator system and offers a low-cost solution to large machines by integrating two low-cost machines with about a ~30% cost reduction. The mechanical connection between the dual machines will provide a better mechanical structure to support system mass and reduce the possibility of sheave deflection for the cantilever machine. The mechanical connection also ensures a compact layout and a narrow rope span. One encoder will be responsible for synchronization. The dual machine arrangement will reduce and simplify machine production lines and investments.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A dual machine arrangement for a hoist assembly of an elevator system, the dual machine arrangement comprising:
dual machines, each comprising a motor and a sheave, which is rotatable by the motor;
a coupling by which respective ends of the sheaves of the dual machines are connected; and
drive circuitry configured to synchronize reverse operations of the dual machines to raise or lower a load.

2. The dual machine arrangement according to claim 1, comprising:
a first machine comprising a first motor and a first sheave, which is rotatable by the first motor in a first direction;
a second machine comprising a second motor and a second sheave, which is rotatable by the second motor in a second direction, which is a reverse of the first direction;
a coupling by which respective ends of the first sheave and the second sheave are connected; and
drive circuitry configured to synchronize reverse operations of the first motor and the second motor to raise or lower a load.

3. The dual machine arrangement according to claim 1 or 2, wherein the load is an elevator car.

4. The dual machine arrangement according to any of claims 1 to 3, wherein each of the motors of the dual machines comprises a radial airgap motor.

5. The dual machine arrangement according to any of claims 1 to 4, wherein the coupling comprises a flange that is secured to each of the respective ends of the sheaves of the dual machines.

6. The dual machine arrangement according to any of claims 1 to 5, wherein the coupling comprises a sleeve that is secured to each of the respective ends of the sheaves of the dual machines.

7. The dual machine arrangement according to any of claims 1 to 6, wherein the coupling is flexible in at least a torsional axis.

8. The dual machine arrangement according to any of claims 1 to 7, wherein the drive circuitry comprises:
an encoder coupled to one of the dual machines and configured to output a synchronization signal for synchronizing the other of the dual machines with the one of the dual machines; and
drives respectively disposed to command the reverse operations of the dual machines based in part on the synchronization signal.

9. The dual machine arrangement according to claim 8, wherein the drives respectively power the reverse operations of the motors of the dual machines.

10. The dual machine arrangement according to claim 8, wherein the drive circuitry is configured to identify an asynchronous condition of the reverse operations of the dual machines and to correct for the asynchronous condition.

11. The dual machine arrangement according to any of claims 1 to 10, comprising a flexible coupling by which respective ends of the first sheave and the second sheave are connected;
wherein the drive circuitry is configured to synchronize reverse operations of the first motor and the second motor to raise or lower a load by identifying an asynchronous condition across the flexible coupling of the reverse operations of the first and second motors and correcting for the asynchronous condition.

12. The dual machine arrangement according to claim 11, wherein the correcting comprises one of temporarily speeding up a lagging one of the first motor and the second motor and temporarily slowing down a leading one of the first motor and the second motor.
